# EUROPEAN PATENT APPLICATION

(11) **EP 2 924 264 A1**
(43) Date of publication of application: **30.09.2015**
(21) Application number: 12888950.8
(22) Date of filing: 20.11.2012
(51) Int. Cl.: F02D 21/08

(54) **CONTROL DEVICE FOR DIESEL ENGINE**

(71) Applicant: TOYOTA JIDOSHA KABUSHIKI KAISHA, Toyota-shi, Aichi-ken, 471-8571 (JP)
(72) Inventor: IEMURA, Akiyuki, Toyota-shi Aichi 471-8571 (JP)
(74) Representative: Smith, Samuel Leonard
(86) International application number: PCT/JP2012/080080
(87) International publication number: WO 2014/080455

(57) **Abstract**

A control device for a diesel engine that is capable of restraining deterioration of a combustion state in a wide range of temperature environment conditions, in a diesel engine including an EGR device. In the control device for a diesel engine including the EGR device which recirculates exhaust gas from an exhaust passage to an intake passage, means for performing reduction correction that reduces an exhaust gas recirculation amount by the EGR device when the combustion state of the diesel engine is deteriorated, means for acquiring a temperature correlation value having a correlation with a cylinder temperature at a time of ignition of the diesel engine, and means for restricting execution of reduction correction when the temperature correlation value is smaller than a threshold value.

## Description

### Technical Field

The present invention relates to a control device for a diesel engine including an EGR device that recirculates exhaust gas from an exhaust passage to an intake passage.

### Background Art

As disclosed in Japanese Patent Laid-Open No. 5-215004, for example, there has been conventionally known an internal combustion engine including an EGR device. In the device, a cylinder pressure maximum value is detected based on a signal from a cylinder pressure sensor. When a difference between a target value and the cylinder pressure maximum value exceeds a predetermined stability limit value, combustion is determined as abnormal combustion, and an EGR rate is corrected to a reducing direction.

### Citation List

### Patent Literature

Patent Literature 1: Japanese Patent Laid-Open No. 5-215004

### Summary of Invention

### Technical Problem

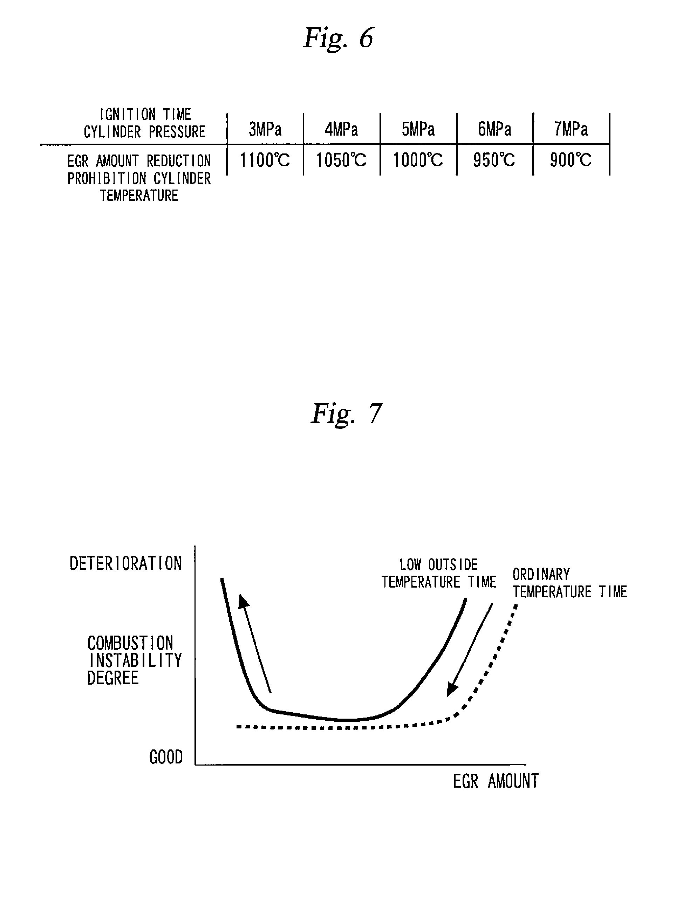

In the above described prior art, in the case of being determined as abnormal combustion, the EGR rate is corrected to the reducing direction to improve combustion, but reducing the EGR amount does not always bring about improvement in combustion. For example, when the EGR amount is reduced, a combustion instability degree changes as shown in a graph in Figure 7. In the graph in Figure 7, changes of the combustion instability degrees (torque variation amounts, for example) with respect to the EGR amounts at a time of a low outside temperature and at a time of an ordinary temperature are respectively drawn. As shown in the graph, when the EGR amount shifts to a reducing direction, the combustion instability degrees immediately shift to a stabilizing direction at the time of the low outside temperature and at the time of the ordinary temperature. Immediate improvement in combustion is the result of the oxygen concentration in intake air being increased by reduction of the EGR amount. However, the subsequent reduction of the EGR amount abruptly changes the combustion to a destabilizing direction only at the time of the low outside temperature. This is because the intake air temperature and the intake pressure are reduced due to reduction of the EGR amount, and contribution to deterioration of combustion becomes large. Therefore, it is sometimes difficult to restrain deterioration of a combustion state under a low-temperature environment with the conventional ordinary EGR control.

The present invention is made in the light of the problem as described above, and has an object to provide a control device for a diesel engine that can restrain deterioration of a combustion state under a wide range of temperature environment conditions, in a diesel engine including an EGR device.

### Solution to Problem

In order to attain the above described object, a first invention is a control device for a diesel engine including an EGR device that recirculates exhaust gas from an exhaust passage to an intake passage, the control device including
control means for performing reduction correction that reduces an exhaust gas recirculation amount by the EGR device when a combustion state of the diesel engine is deteriorated,
first acquisition means for acquiring a temperature correlation value having a correlation with a cylinder temperature at a time of ignition of the diesel engine, and
restriction means for restricting execution of the reduction correction when the temperature correlation value is smaller than a predetermined threshold value.

A second invention is such that, in the first invention,
the first acquisition means acquires a temperature of intake air that is taken into a cylinder of the diesel engine as the temperature correlation value.

A third invention is such that, in the first or the second invention,
the restriction means is means for stopping the reduction correction and performing increase correction that increases the exhaust gas recirculation amount, when the temperature correlation value is smaller than the threshold value.

A fourth invention further includes, in any one of the first to the third inventions,
second acquisition means for acquiring a pressure correlation value having a correlation with a cylinder pressure at the time of ignition of the diesel engine, and
means for setting the threshold value in accordance with the pressure correlation value.

A fifth invention is such that, in the fourth invention,
the second acquisition means acquires a pressure of air that is taken into the cylinder of the diesel engine as the pressure correlation value.

A sixth invention further includes, in any one of the first to the fifth inventions,
means for acquiring an air-fuel ratio of the diesel engine, and
means for prohibiting execution of the restriction means, when the air-fuel ratio is richer than a predetermined air-fuel ratio.

A seventh invention further includes, in any one of the first to the sixth inventions,
means for changing fuel injection timing to an advance side, when the temperature correlation value is smaller than a threshold value.

An eighth invention further includes, in any one of the first to the sixth inventions,
means for increasing an injection amount of pilot injection, when the temperature correlation value is smaller than a threshold value.

A ninth invention is such that, in any one of the first to the eighth inventions,
the control means includes means for acquiring a temporal variation rate of a speed of the diesel engine, and reduces the exhaust gas recirculation amount by the EGR device when the temporal variation rate is larger than a predetermined variation rate.

### Advantageous Effects of Invention

According to the first invention, in the diesel engine which performs reduction correction that reduces the exhaust gas recirculation amount (the EGR amount) by the EGR device when the combustion state is deteriorated, execution of the reduction correction is restricted, when the temperature correlation value having a correlation with the cylinder temperature at the time of ignition is smaller than the threshold value. If the EGR amount is reduced in a state in which the cylinder temperature at the time of ignition is low, a contribution to deterioration of combustion due to reduction in the intake air temperature and the intake pressure becomes larger than a contribution to stability of combustion by increase of an intake air oxygen concentration, and the combustion state shifts to a destabilizing direction. Therefore, according to the present invention, the reduction correction can be restricted in accordance with the state of the cylinder temperature, and therefore, deterioration of the combustion state can be restrained in a wide range of temperature environment conditions.

According to the second invention, the temperature of the intake air which is taken into the cylinder of the diesel engine is acquired as the temperature correlation value, and therefore, the temperature correlation value can be acquired with a simple structure.

According to the third invention, the reduction correction is stopped and the increase correction of the EGR amount is performed when the temperature correlation value is smaller than the threshold value. Therefore, according to the present invention, the EGR amount is increased when the temperature correlation value is smaller than the threshold value, and therefore, deterioration of the combustion state can be prevented by putting a stop to reduction of the intake air temperature and the intake pressure.

According to the fourth invention, the threshold value is set in accordance with the pressure correlation value having a correlation with the cylinder pressure at the time of ignition. The cylinder temperature at the time of ignition when combustion is unstable changes in response to the cylinder pressure. Therefore, according to the present invention, timing at which combustion becomes unstable can be accurately determined by setting the threshold value to be variable in accordance with the pressure correlation value.

According to the fifth invention, the pressure of the intake air which is taken into the cylinder of the diesel engine is acquired as the pressure correlation value, and therefore, the pressure correlation value can be acquired with the simple structure.

According to the sixth invention, restriction of the reduction correction is prohibited when the air-fuel ratio of the diesel engine is richer than the predetermined air-fuel ratio. As the air-fuel ratio becomes richer, deterioration of the combustion stability is more difficult to cause. Therefore, according to the present invention, the situation in which unnecessary restriction of the EGR amount is performed in the conditions where deterioration of combustion stability does not occur can be effectively restrained.

According to the seventh invention, the fuel injection timing is changed to the advance side when restriction of the reduction of the EGR amount is performed. Therefore, according to the present invention, the ignition timing can be advanced, and therefore, reduction in drivability can be effectively restrained by enhancing combustion stability.

According to the eighth invention, the injection amount of the pilot injection is increased when restriction of reduction of the EGR amount is performed. Therefore, according to the present invention, the cylinder temperature can be increased, and therefore, reduction in drivability can be effectively restrained by enhancing combustion stability.

According to the ninth invention, the combustion state can be accurately determined by using the temporal variation rate of the engine speed.

### Brief Description of Drawings

[Figure 1] Figure 1 is a diagram showing a configuration of an engine system as an embodiment of the present invention.
[Figure 2] Figure 2 is a timing chart showing a combustion instability degree, an EGR amount and a cylinder temperature (a compression end temperature) at a time of ignition.
[Figure 3] Figure 3 is a diagram comparing changes of the combustion instability degrees with respect to the EGR amount at a time of a low outdoor temperature and at a time of a high outdoor temperature.
[Figure 4] Figure 4 is a timing chart for explaining EGR control of the embodiment of the present invention.
[Figure 5] Figure 5 is a diagram comparing changes of the combustion instability degrees with respect to the EGR amount at a time of a low atmospheric pressure and at a time of a high atmospheric pressure.
[Figure 6] Figure 6 is one example of a map specifying a relation of a cylinder temperature at the time of ignition which restricts EGR amount reduction correction and a cylinder pressure at the time of ignition.
[Figure 7] Figure 7 is a diagram showing changes of the combustion instability degrees with respect to the EGR amount at the time of a low outside temperature and at the time of an ordinary temperature.

### Description of Embodiments

### Embodiment 1

Embodiment 1 of the present invention will be described with reference to the drawings.

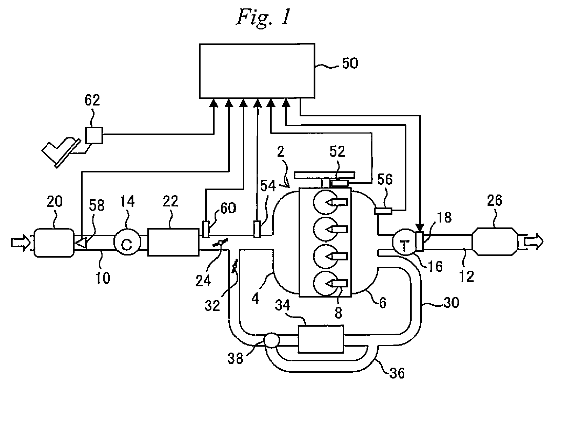

Figure 1 is a diagram showing a configuration of an engine system as the embodiment of the present invention. An engine of the present embodiment is a diesel engine with a turbocharger (hereinafter, simply called an engine). A main body 2 of the engine is equipped with four cylinders in series, and an injector 8 is provided in each of the cylinders. An intake manifold 4 and an exhaust manifold 6 are mounted to the engine main body 2. An intake passage 10 in which fresh air that is taken in from an air cleaner 20 flows is connected to the intake manifold 4. A compressor 14 of a turbocharger is mounted to the intake passage 10. In the intake passage 10, a diesel throttle 24 is provided downstream of the compressor 14. In the intake passage 10, an intercooler 22 is included between the compressor 14 and the diesel throttle 24. An exhaust passage 12 for releasing exhaust gas, which is discharged from the engine main body 2, into atmosphere is connected to the exhaust manifold 6. A turbine 16 of the turbocharger is mounted to the exhaust passage 12. The turbocharger of the present embodiment is of a variable displacement type, and a variable nozzle 18 is included in the turbine 16. A catalyst device 26 for purifying exhaust gas is provided downstream of the turbine 16 in the exhaust passage 12.

The engine of the present embodiment includes an EGR device that recirculates exhaust gas from an exhaust system to an intake system. In the EGR device, a position that is downstream of the diesel throttle 24 in the intake passage 10 and the exhaust manifold 6 are connected by an EGR passage 30. An EGR valve 32 is provided in the EGR passage 30. An EGR cooler 34 is included at an exhaust side of the EGR valve 32 in the EGR passage 30. A bypass passage 36 that bypasses the EGR cooler 34 is provided at the EGR passage 30. A bypass valve 38 that switches a direction in which exhaust gas flows is provided at a spot where the EGR passage 30 and the bypass passage 36 join each other.

The engine system of the present embodiment includes an ECU (an Electronic Control Unit) 50. The ECU 50 is a control device that generally controls the entire engine system. The ECU 50 takes in and processes signals from sensors that are included by the engine system. The sensors are attached to various places of the engine system. For example, in the intake passage 10, an air flow meter 58 is attached downstream of the air cleaner 20, an intake air temperature sensor 60 is attached to a vicinity of an outlet of the intercooler 22, and a boost pressure sensor 54 is attached downstream of the diesel throttle. Further, an exhaust pressure sensor 56 is attached to the exhaust manifold 6. Furthermore, an engine speed sensor 52 that detects rotation of a crankshaft, an accelerator opening degree sensor 62 that outputs a signal corresponding to an opening degree of an accelerator pedal and the like are also attached. The ECU 50 processes the signals from the various sensors which are taken in and operates various actuators in accordance with a predetermined control program. The actuators which are operated by the ECU 50 include the variable nozzle 18, the injectors 8, the EGR valve 32, the diesel throttle 24 and the like. Note that a number of actuators and sensors which are connected to the ECU 50 are present other than the sensors and the actuators shown in the drawing, but explanation of the other actuators and sensors will be omitted in the present description.

Engine control that is executed by the ECU 50 includes EGR control. In the EGR control of the present embodiment, the EGR valve 32 is operated by feedback control so that an actual EGR rate that is calculated from the signals of the various sensors becomes a target EGR rate. In the present embodiment, PID control based on a difference between an actual value and a target value is performed in the EGR control, and in carrying out the present invention, there is no limitation concerning a specific method of the feedback control in the EGR control.

Further, in the EGR control of the present embodiment, processing for reducing the EGR amount (hereinafter, called "EGR amount reduction correction") is performed when combustion becomes unstable. In more detail, in the EGR amount reduction correction, as a value expressing an instability degree of combustion, a temporal variation rate of an engine speed (hereinafter, called "a speed variation"), for example, is calculated, and when the calculated speed variation is larger than a predetermined threshold value, a target EGR rate is corrected to a low rate side. Note that in the present embodiment, in the EGR amount reduction correction, a correction amount is set in accordance with a magnitude of the speed variation, but in carrying out the present invention, there is no limitation concerning a specific calculation method of the correction amount.

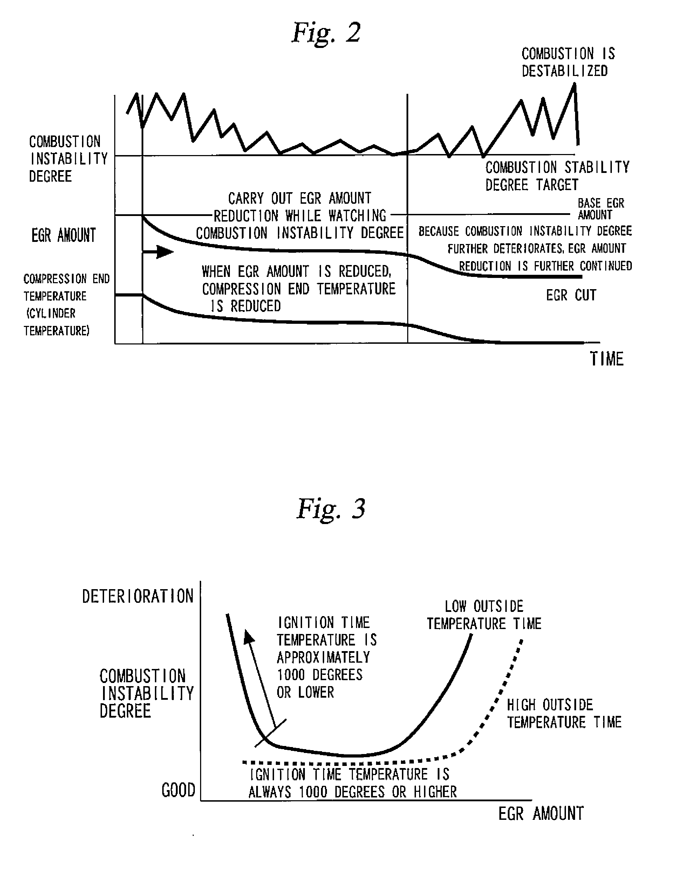

As above, according to the EGR amount reduction correction, an oxygen concentration in the intake air which is taken into the cylinder can be increased when combustion is unstable, and therefore, combustion deterioration due to a misfire or the like is restrained, and deterioration of drivability can be prevented. However, reducing the EGR amount does not always bring about improvement in combustion. Figure 2 is a timing chart showing the combustion instability degree, the EGR amount and a cylinder temperature (a compression end temperature) at a time of ignition. In the EGR amount reduction correction of the present embodiment, the EGR amount is controlled to a reducing direction when combustion becomes unstable. Therefore, in the example shown in the drawing, the combustion instability degree shifts to a stabilizing direction by the EGR amount being reduced. However, as is understandable from the drawing, when the EGR amount is reduced, the compression end temperature in the cylinder is reduced by reduction in an intake air temperature and an intake pressure. Therefore, if the EGR amount continues to be reduced under a low temperature environment, for example, it is assumed that the compression end temperature becomes too low, and a combustion state shifts to a deteriorating direction conversely.

Figure 3 is a diagram comparing changes of the combustion instability degrees to the EGR amount at a time of a low outside temperature and at a time of a high outside temperature. In an example shown in the drawing, when the EGR amount shifts to a reducing direction at the time of a high outside temperature, the combustion instability degree immediately shifts to the stabilizing direction and thereafter, has a substantially fixed value. In contrast with this, when the EGR amount shifts to the reducing direction at the time of a low outside temperature, the combustion instability degree shifts to the stabilizing direction, but when reduction of the EGR amount is further continued, the combustion state shifts to the destabilizing direction again. As above, when the cylinder temperature at the time of ignition is equal to or lower than 1000°C due to an influence of the outside temperature or the like, instability of combustion due to the EGR amount reduction occurs.

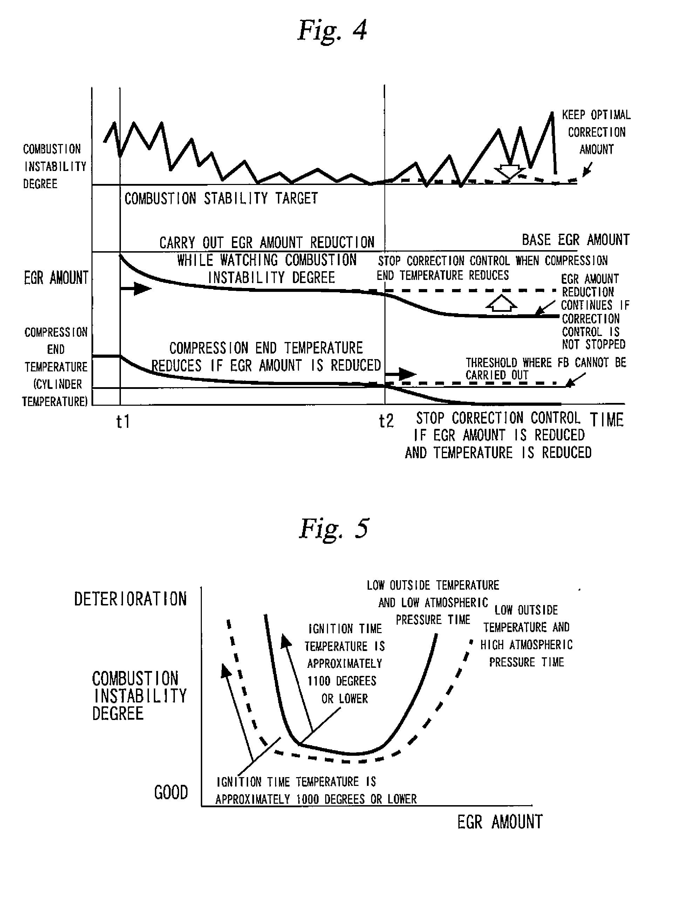

Therefore, in the engine system of the present embodiment, whether or not to execute the EGR amount reduction correction is determined by using the cylinder temperature at the time of ignition. Hereinafter, with reference to Figure 4, the EGR control of the present embodiment of the present invention will be described in detail. Figure 4 is a timing chart for explaining the EGR control of the embodiment of the present invention. In the example shown in the drawing, the ECU 50 carries out the aforementioned EGR amount reduction correction at a time point t1. The ECU 50 estimates the cylinder temperature at the time of ignition based on the intake air temperature which is measured by the intake air temperature sensor 60, the boost pressure which is measured by the boost pressure sensor 54 and the like during implementation of the EGR amount reduction correction. Subsequently, when the estimated cylinder temperature falls below a predetermined threshold value at a time point t2, the ECU 50 restricts reduction of the EGR amount by the EGR amount reduction correction. Here, more specifically, a method for keeping the EGR amount at an optimal correction amount by stopping the EGR amount reduction correction (performing increase correction that increases the EGR amount in some cases), a method of changing feedback gain of the EGR control in response to the cylinder temperature so that the cylinder temperature at the time of ignition does not fall below the threshold value, and the like can be performed. Note that for the predetermined threshold value, a value (for example, 1000°C) that is set by an experiment or the like can be used as the cylinder temperature at the time of ignition at which a combustion instability phenomenon occurs.

According to the EGR control as above, the EGR amount reduction correction can be restricted by accurately determining the case where combustion becomes instable due to reduction of the EGR amount, and therefore, reduction in drivability due to combustion deterioration can be restrained in a wide range of operation regions.

Incidentally, in the engine system of embodiment 1 described above, whether or not to execute the EGR amount reduction correction is determined based on the cylinder temperature at the time of ignition. However, the value which is usable in determination of whether or not to execute the EGR amount reduction correction can be a value that has a correlation with the cylinder temperature at the time of ignition, and the intake air temperature which is measured by the intake air temperature sensor 60, for example, may be used in place of the cylinder temperature at the time of ignition.

Further, in the engine system of embodiment 1 described above, the EGR amount reduction correction is restricted when the cylinder temperature at the time of ignition is lower than the predetermined threshold value, and in addition to this control, control of advancing fuel injection timing, and control of increasing an injection amount of pilot injection (preheating injection) may be executed in combination. According to the control like this, combustion stability is further enhanced, and reduction in drivability can be effectively restrained. Note that the control can be also applied to engine systems of embodiments 2 and 3 that will be described later.

### Embodiment 2

Next, embodiment 2 of the present invention will be described with reference to the drawings. An engine system of embodiment 2 has a feature in that whether or not to execute the EGR amount reduction correction is determined in accordance with a cylinder pressure. In the engine system of embodiment 1 described above, whether or not to execute the EGR amount reduction correction is determined based on the cylinder temperature at the time of ignition. Here, the cylinder temperature at the time of ignition when a combustion instability degree deteriorates is influenced by the cylinder pressure. Figure 5 is a diagram comparing changes in the combustion instability degrees to the EGR amount at a time of a low atmospheric pressure and a time of a high atmospheric pressure. In the example shown in Figure 5, the combustion instability degree is deteriorated when the cylinder temperature at the time of ignition is equal to or lower than approximately 1100 degrees at the time of a low atmospheric pressure, whereas combustion instability degree is deteriorated when the cylinder temperature at the time of ignition is equal to or lower than approximately 1000 degrees at the time of a low atmospheric pressure.

Therefore, in the engine system of embodiment 2 of the present invention, the cylinder pressure at the time of ignition is measured or estimated by using a known method, and a threshold value of the cylinder temperature at the time of ignition with which whether or not to execute the EGR amount reduction correction is determined is set in accordance with the relevant cylinder pressure. Figure 6 is an example of a map that specifies a relation of the cylinder temperature at the time of ignition which restricts the EGR amount reduction correction and the cylinder pressure at the time of ignition. As shown in the drawing, as the cylinder pressure at the time of ignition is higher, the cylinder temperature at the time of ignition which restricts the EGR amount reduction correction is set to be lower. Thereby, under the environment in which the cylinder pressure is low, an execution region of the EGR amount reduction correction is enlarged, and therefore, the engine system with less reduction in drivability can be provided.

Incidentally, in the engine system of embodiment 2 described above, the threshold value for determining whether or not to execute the EGR amount reduction correction is set based on the cylinder pressure at the time of ignition. However, the value which is usable in setting the threshold value can be a value having a correlation with the cylinder pressure at the time of ignition, and an intake pressure that is measured by the boost pressure sensor 54, for example, may be used in place of the cylinder pressure at the time of ignition.

Further, in the engine system of embodiment 2 described above, the threshold value for determining whether or not to execute the EGR amount reduction correction is set based on the cylinder pressure at the time of ignition, but the feedback gain of the EGR control may be changed in accordance with the cylinder pressure at the time of ignition.

### Embodiment 3

Next, embodiment 3 of the present invention will be described with reference to the drawing. An engine system of embodiment 3 has a feature in that whether or not to execute the EGR amount reduction correction is determined in accordance with an air-fuel ratio. That is to say, in the engine system of embodiment 1 described above, whether or not to execute the EGR amount reduction correction is determined based on the cylinder temperature at the time of ignition. However, in the knowledge of the inventor, combustion instability due to the EGR amount reduction correction does not occur unless the air-fuel ratio is in a state with excessive air.

Therefore, in the engine system of embodiment 3 of the present invention, an air-fuel ratio (A/F) is measured or estimated by using a known method, and when the cylinder temperature at the time of ignition is below a predetermined threshold value, and the air-fuel ratio is leaner than a predetermined air-fuel ratio, execution of the EGR amount reduction correction is prohibited. Thereby, determination of whether or not to execute the EGR amount reduction correction can be performed more accurately, and therefore, the engine system with less reduction in drivability can be provided.

### Reference Signs List

- 2: Engine main body
- 4: Intake manifold
- 6: Exhaust manifold
- 8: Injector
- 10: Intake passage
- 12: Exhaust passage
- 14: Compressor
- 16: Turbine
- 18: Variable nozzle
- 30: EGR passage
- 32: EGR valve
- 50: ECU
- 52: Rotational frequency sensor
- 54: Boost pressure sensor
- 56: Exhaust pressure sensor
- 58: Air flow meter
- 60: Intake air temperature sensor
- 62: Accelerator opening degree sensor

## Claims

1. A control device for a diesel engine including an EGR device that recirculates exhaust gas from an exhaust passage to an intake passage, the control device comprising:
control means for performing reduction correction that reduces an exhaust gas recirculation amount by the EGR device when a combustion state of the diesel engine is deteriorated;
first acquisition means for acquiring a temperature correlation value having a correlation with a cylinder temperature at a time of ignition of the diesel engine; and
restriction means for restricting execution of the reduction correction when the temperature correlation value is smaller than a predetermined threshold value.

2. The control device for a diesel engine according to claim 1,
wherein the first acquisition means acquires a temperature of intake air that is taken into a cylinder of the diesel engine as the temperature correlation value.

3. The control device for a diesel engine according to claim 1 or 2,
wherein the restriction means is means for stopping the reduction correction and performing increase correction that increases the exhaust gas recirculation amount, when the temperature correlation value is smaller than the threshold value.

4. The control device for a diesel engine according to any one of claims 1 to 3, further comprising:
second acquisition means for acquiring a pressure correlation value having a correlation with a cylinder pressure at the time of ignition of the diesel engine; and
means for setting the threshold value in accordance with the pressure correlation value.

5. The control device for a diesel engine according to claim 4,
wherein the second acquisition means acquires a pressure of air that is taken into the cylinder of the diesel engine as the pressure correlation value.

6. The control device for a diesel engine according to any one of claims 1 to 5, further comprising:
means for acquiring an air-fuel ratio of the diesel engine; and
means for prohibiting execution of the restriction means, when the air-fuel ratio is richer than a predetermined air-fuel ratio.

7. The control device for a diesel engine according to any one of claims 1 to 6, further comprising:
means for changing fuel injection timing to an advance side, when the temperature correlation value is smaller than a threshold value.

8. The control device for a diesel engine according to any one of claims 1 to 6, further comprising:
means for increasing an injection amount of pilot injection, when the temperature correlation value is smaller than a threshold value.

9. The control device for a diesel engine according to any one of claims 1 to 8,
wherein the control means includes means for acquiring a temporal variation rate of a speed of the diesel engine, and reduces the exhaust gas recirculation amount by the EGR device when the temporal variation rate is larger than a predetermined variation rate.
